# FASCICULE DE BREVET EUROPEEN

(11) **EP 3 487 366 B1**
(45) Date de publication et mention de la délivrance du brevet: **30.09.2020**
(21) Numéro de dépôt: 17754751.0
(22) Date de dépôt: 21.07.2017
(51) Int. Cl.: A47J 27/04

(54) **CUISEUR ÉLECTRIQUE**
ELEKTRISCHER KOCHER
ELECTRIC COOKER

(30) Priorité: 22.07.2016 FR 1657072
(43) Date de publication de la demande: 29.05.2019
(73) Titulaire: SEB S.A., 69130 Ecully (FR)
(72) Inventeur: MA, Chao, Hangzhou Zhejiang 310051 (CN); LV, Hua, Hangzhou Zhejiang 310051 (CN)
(74) Mandataire: SEB Developpement Brevets
(86) Numéro de dépôt international: PCT/FR2017/052029
(87) Numéro de publication internationale: WO 2018/015700

(56) Documents cités:
- FR-A1- 2 899 783
- US-A- 5 092 229
- US-B1- 6 840 159

## Description

La présente invention concerne le domaine de la cuisson des aliments, il concerne concrètement un cuiseur électrique.

Il est connu du document US6840159B1 un cuiseur électrique comprenant un boîtier externe, un couvercle supérieur, un récipient interne installé à l'intérieur du boîtier externe, un panier à vapeur installé à l'intérieur du récipient interne, et sous ce panier à vapeur se trouvant un mécanisme d'ouverture faisant face à la paroi du fond du récipient interne et/ou situé dans le prolongement de la paroi latérale du récipient interne, le panier à vapeur étant pourvu d'une zone perméable et incluant une chambre de remplissage située sur cette zone perméable, un espace d'ouverture entouré par le mécanisme d'ouverture étant relié à la chambre de remplissage par l'intermédiaire de la zone perméable, l'intervalle entre la surface extérieure du panier à vapeur et la surface de la paroi latérale intérieure du récipient interne formant un compartiment, lequel compartiment étant relié à la chambre de remplissage par l'intermédiaire de l'espace d'ouverture, le couvercle supérieur et la partie supérieure de la chambre de remplissage étant hermétiquement abouchés.

Les cuiseurs électriques pour cuire le riz, comme les cuiseurs à riz actuels, comprennent un récipient interne à l'intérieur duquel est disposé un panier à vapeur, le riz est placé dans le panier à vapeur, l'eau dans le récipient interne. On chauffe le récipient interne afin de porter l'eau se trouvant dans le récipient interne à ébullition pour qu'elle pénètre dans le panier à vapeur et vienne rincer le riz, ceci jusqu'à ce que le niveau de l'eau baisse en-dessous du panier à vapeur. On procède ensuite à la séparation du riz et de l'eau. Puis, on continue de chauffer, et on emploie la vapeur générée pour cuire le riz à la vapeur. L'eau du rinçage aura emporté une partie du sucre contenue dans le riz avec l'eau de riz de manière qu'on obtiendra un riz cuit à faible teneur en sucre.

L'utilisation des paniers à vapeur existant actuellement présente certains inconvénients, notamment parce qu'ils utilisent uniquement de l'eau bouillante, ce qui est peu favorable au contact entier de l'eau et du riz. La méthode dans laquelle l'eau entre dans le panier à vapeur pour venir rincer le riz ou faire en sorte que le riz absorbe l'eau ne permet pas de garantir qu'une quantité suffisante d'eau entre dans le panier à vapeur, ce qui conduit à l'impossibilité pour une partie du riz d'entrer en contact avec l'eau et donc à l'impossibilité de procéder efficacement au rinçage du riz et à l'absorption de l'eau par le riz, ce qui affecte au final la texture en bouche du riz obtenu. En outre, les structures actuelles de panier à vapeur ne permettent pas non plus de garantir la bonne réalisation du processus de séparation de l'eau et du riz, ce qui rend difficile l'obtention d'un riz à indice glycémique (IG) (sucre) bas.

L'objectif principal de la présente invention est de fournir un cuiseur électrique permettant de résoudre les difficultés techniques des cuiseurs électriques actuels de réalisation stable du processus de contact de l'eau et du riz ou de séparation de l'eau et du riz qui entraînent l'impossibilité de cuire un riz à indice glycémique (IG) bas.

Afin de réaliser l'objectif susmentionné, la présente invention propose un cuiseur électrique qui comprend : un boîtier externe, un couvercle supérieur, lequel couvercle supérieur est installé sur le boîtier externe ; un récipient interne installé à l'intérieur du boîtier externe ; un panier à vapeur installé à l'intérieur du récipient interne, et sous ce panier à vapeur se trouve un mécanisme d'ouverture faisant face à la paroi du fond du récipient interne et/ou situé dans le prolongement de la paroi latérale du récipient interne ; le panier à vapeur est pourvu d'une zone perméable et inclut une chambre de remplissage située sur cette zone perméable ; l'espace d'ouverture entouré par le mécanisme d'ouverture est relié à la chambre de remplissage par l'intermédiaire de la zone perméable ; l'intervalle entre la surface extérieure du panier à vapeur et la surface de la paroi latérale intérieure du récipient interne forme un compartiment, lequel compartiment est relié à la chambre de remplissage par l'intermédiaire de l'espace d'ouverture ; le couvercle supérieur et la partie supérieure de la chambre de remplissage sont hermétiquement abouchés ; un élément de régulation de la pression relié à la chambre de remplissage, lequel élément de régulation de la pression est destiné à réguler la pression à l'intérieur de la chambre de remplissage.

Selon une autre variante de réalisation, l'élément de régulation de la pression comprend, installés de manière indépendante : un mécanisme de succion de l'air, lequel mécanisme de succion de l'air comprend une pièce de succion de l'air, cette pièce de succion de l'air aspire l'air à l'intérieur de la chambre de remplissage et l'évacue vers l'espace extérieur au cuiseur électrique ; un mécanisme d'injection de l'air, lequel mécanisme d'injection de l'air comprend un circuit d'injection de l'air et un mécanisme de commutation installé sur le circuit d'injection de l'air, une extrémité de ce circuit d'injection de l'air est reliée à la chambre de remplissage, et l'autre extrémité de ce circuit d'injection de l'air est reliée directement au compartiment ou bien à l'espace extérieur au cuiseur électrique.

Selon une autre variante de réalisation, le mécanisme de succion de l'air comprend encore : un circuit de succion de l'air relié à l'orifice d'admission de l'air de la pièce de succion de l'air ; et/ou un circuit d'évacuation de l'air relié à l'orifice d'évacuation de l'air de la pièce de succion de l'air.

Selon une autre variante de réalisation, au moins une partie de l'élément de régulation de la pression est installé sur le couvercle supérieur et/ou sur le boîtier externe.

Selon une autre variante de réalisation, le mécanisme de succion de l'air et le mécanisme d'injection de l'air sont tous deux installés à l'intérieur du couvercle supérieur.

Selon une autre variante de réalisation, le couvercle supérieur comprend un premier canal d'installation qui relie la chambre de remplissage à l'espace extérieur au cuiseur électrique, et la pièce de succion de l'air est installée à l'intérieur de ce premier canal d'installation.

Selon une autre variante de réalisation, le couvercle supérieur comprend un second canal d'installation qui relie la chambre de remplissage à l'espace extérieur au cuiseur électrique, et le mécanisme de commutation est installé à l'intérieur de ce second canal d'installation et contrôle l'état de fermeture et d'ouverture de ce second canal d'installation, lequel second canal d'installation fait office de circuit d'injection de l'air.

Selon une autre variante de réalisation, la pièce de succion de l'air est une pompe à vide ou une pompe de dépression.

Selon une autre variante de réalisation, le mécanisme de commutation est soit une valve de commutation électrique soit une électrovalve.

Dans l'application du plan technique de la présente invention, le panier à vapeur est installé à l'intérieur du récipient interne, et sous ce panier à vapeur se trouve un mécanisme d'ouverture faisant face à la paroi du fond du récipient interne et/ou situé dans le prolongement de la paroi latérale du récipient interne ; le panier à vapeur est pourvu d'une zone perméable et inclut une chambre de remplissage située sur cette zone perméable ; l'espace d'ouverture entouré par le mécanisme d'ouverture est relié à la chambre de remplissage par l'intermédiaire de la zone perméable ; l'intervalle entre la surface extérieure du panier à vapeur et la surface de la paroi latérale intérieure du récipient interne forme un compartiment, lequel compartiment est relié à la chambre de remplissage par l'intermédiaire de l'espace d'ouverture ; le couvercle supérieur et la partie supérieure de la chambre de remplissage sont hermétiquement abouchés ; le compartiment et l'espace extérieur au cuiseur électrique sont reliés.

Après que le panier à vapeur a été placé dans le récipient interne, le niveau de l'eau se trouvant à l'intérieur du récipient interne ferme le côté du mécanisme d'ouverture se trouvant le plus éloigné de la chambre de remplissage, alors l'échange gazeux entre le compartiment et la chambre de remplissage cesse. Dans une phase préliminaire, lorsque l'élément de régulation de la pression directement relié à la chambre de remplissage du panier à vapeur fonctionne, l'élément de régulation de la pression est en mode de succion de l'air, ce qui permet de réduire efficacement la pression à l'intérieur de la chambre de remplissage, à ce moment-là, l'eau se trouvant dans le récipient interne passe par l'espace d'ouverture et la zone perméable pour pénétrer jusque dans la chambre de remplissage et réaliser le trempage et la cuisson à l'eau du riz. Lorsque que l'élément de régulation de la pression ne fonctionne pas ou est en mode d'injection de l'air, la pression à l'intérieur de la chambre de remplissage peut être accrue, ceci afin d'équilibrer la pression de la chambre de remplissage avec la pression du compartiment et faire en sorte que l'eau entre dans et sorte de la chambre de remplissage, ceci afin de réaliser la séparation de l'eau et du riz, et le rinçage du riz par l'eau.

Lors du processus de chauffage du récipient interne, combiné au fonctionnement de l'élément de régulation de la pression, l'eau est sous l'action de la différence de pression envoyée de manière répétée dans la chambre de remplissage pour entrer en contact avec le riz de manière à successivement rincer, tremper, cuire à l'eau le riz et à ce que le riz absorbe l'eau ; le niveau de l'eau diminue jusqu'à ne plus pouvoir fermer l'espace d'ouverture, à ce moment-là, le compartiment, l'espace d'ouverture et la chambre de remplissage sont progressivement reliés. Lorsqu'on continue de chauffer le récipient interne, et même si l'élément de régulation de la pression est en mode de succion de l'air, l'eau ne peut plus monter jusque dans la chambre de remplissage, à ce moment-là, la vapeur générée s'élève à travers le mécanisme d'ouverture et pénètre dans la chambre de remplissage, ou bien passe par le compartiment avant de passer à travers le mécanisme d'ouverture et pénétrer dans la chambre de remplissage, afin de réaliser le processus de cuisson à la vapeur du riz.

On peut voir que le contrôle de l'élément de régulation de la pression permet de faire en sorte que l'eau se trouvant dans le récipient interne du cuiseur électrique entre dans ou sorte de la chambre de remplissage ; le contrôle du nombre d'entrées ou de sorties de l'eau dans ou hors de la chambre de remplissage, de la température de l'eau et du temps de rétention de l'eau à l'intérieur de la chambre de remplissage permet au cuiseur électrique de réaliser de manière automatique le processus de rinçage du riz et d'absorption de l'eau par le riz, et en même temps de réaliser le processus de cuisson à l'eau puis cuisson à la vapeur du riz à l'intérieur de la chambre de remplissage, de manière que le cuiseur électrique cuise un riz à indice glycémique (IG) bas plus nutritif, et à augmenter le degré de satisfaction des consommateurs relativement au processus de cuisson. Aussi, le cuiseur électrique de la présente invention est multifonction, largement automatisé et pratique à l'usage.

Les figures annexes qui constituent une partie intégrante de la présente demande sont destinées à améliorer la compréhension de la présente invention, les exemples d'applications schématiques de la présente invention et leurs explications sont destinés à expliquer la présente invention, sans pour autant constituer de restriction inappropriée de la présente invention. Dans les figures annexes :
La figure 1 est le schéma structurel d'un cuiseur à riz pourvu d'un élément de régulation de la pression selon un exemple d'application possible de la présente invention.
La figure 2 est un agrandissement de la zone A de la figure 1.
La figure 3 est le schéma du statut de cuisson lorsque l'eau à l'intérieur du récipient interne du cuiseur à riz de la figure 1 n'est pas encore montée jusque dans la chambre de remplissage pour entrer en contact avec le riz.
La figure 4 est le schéma du statut de cuisson lorsque l'eau à l'intérieur du récipient interne du cuiseur à riz de la figure 1 est montée jusque dans la chambre de remplissage pour être en contact avec le riz.

Il faut préciser qu'en l'absence d'incompatibilité, les exemples d'applications de la présente demande et les caractéristiques de ces exemples d'applications peuvent être mutuellement combinées. On va ci-dessous expliquer de manière concise la présente invention au moyen des figures annexes de référence combinées à des exemples d'applications.

Il faut noter que les explications détaillées ci-dessous sont toutes fournies à titre d'exemples dans le but de fournir une explication plus poussée de la présente invention. Sauf mention contraire, tous les termes techniques et scientifiques employés ici ont l'acception courante telle qu'admise par le personnel technique ordinaire du domaine technique duquel relève la présente demande.

Dans la présente invention, en l'absence d'indication inverse, les termes de direction tels que "au-dessus, au-dessous, en haut de, en bas de" renvoient généralement aux orientations indiquées sur les figures annexes, ou bien renvoient aux directions verticales, perpendiculaires ou de gravité des pièces elles-mêmes. De même, afin de faciliter la compréhension et la description, "à l'intérieur de" et "à l'extérieur de" renvoient à l'intérieur ou à l'extérieur de la silhouette de la pièce en question, toutefois, les termes de direction susmentionnés ne constituent en rien une limitation de la présente invention.

La présente invention propose un cuiseur électrique destiné à résoudre les problèmes techniques des cuiseurs électriques mono-fonction actuels.

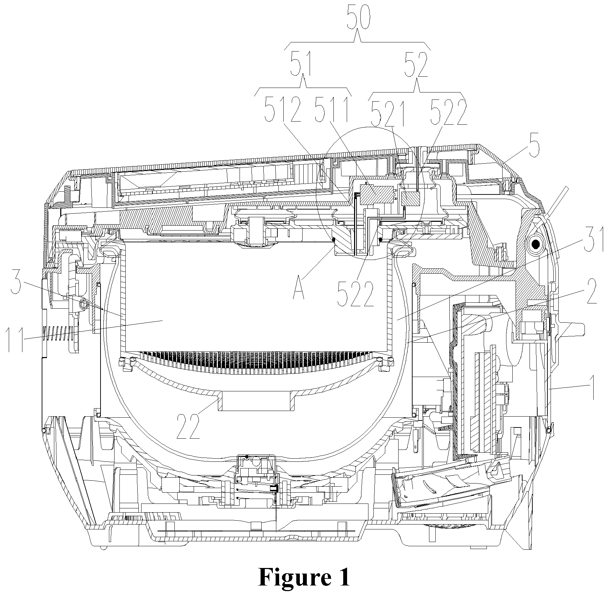

Le cuiseur électrique représenté sur la figure 1 est un cuiseur à riz. Ce cuiseur électrique comprend : un boîtier externe (1) ; un couvercle supérieur (5) ; un récipient interne (2) installé à l'intérieur du boîtier externe (1) ; un élément de régulation de la pression (50) reliant un panier à vapeur (3) et une chambre de remplissage (11) installés à l'intérieur du récipient interne (2). Le couvercle supérieur (5) est installé sur le boîtier externe (1). Sous le panier à vapeur (3) se trouve un mécanisme d'ouverture (22) faisant face à la paroi du fond du récipient interne (2) et/ou situé dans le prolongement de la paroi latérale du récipient interne (2). Le panier à vapeur (3) est pourvu d'une zone perméable et inclut la chambre de remplissage (11) située sur cette zone perméable. L'espace d'ouverture entouré par le mécanisme d'ouverture (22) est relié à la chambre de remplissage (11) par l'intermédiaire de la zone perméable. L'intervalle entre la surface extérieure du panier à vapeur (3) et la surface de la paroi latérale intérieure du récipient interne (2) forme un compartiment (31), lequel compartiment (31) est relié à la chambre de remplissage (11) par l'intermédiaire de l'espace d'ouverture. Le couvercle supérieur (5) et la partie supérieure de la chambre de remplissage (11) sont hermétiquement abouchés. L'élément de régulation de la pression (50) est destiné à réguler la pression à l'intérieur de la chambre de remplissage (11), ceci afin de contrôler les entrées et sorties de l'eau se trouvant dans le récipient interne (2) dans et hors de la chambre de remplissage (11) par l'intermédiaire du mécanisme d'ouverture (22).

Bien entendu, le cuiseur électrique de la présente invention peut encore être un four micro-ondes, avec installés en son sein un récipient interne (2) et un panier à vapeur (3).

Dans l'application de la présente invention, le panier à vapeur (3) est installé à l'intérieur du récipient interne (2), et sous ce panier à vapeur (3) se trouve un mécanisme d'ouverture (22) faisant face à la paroi du fond du récipient interne (2) et/ou situé dans le prolongement de la paroi latérale du récipient interne (2). Le panier à vapeur (3) est pourvu d'une zone perméable et inclut une chambre de remplissage (11) située sur cette zone perméable. L'espace d'ouverture entouré par le mécanisme d'ouverture (22) est relié à la chambre de remplissage (11) par l'intermédiaire de la zone perméable. L'intervalle entre la surface extérieure du panier à vapeur (3) et la surface de la paroi latérale intérieure du récipient interne (2) forme un compartiment (31), lequel compartiment (31) est relié à la chambre de remplissage (11) par l'intermédiaire de l'espace d'ouverture. Le couvercle supérieur (5) et la partie supérieure de la chambre de remplissage (11) sont hermétiquement abouchés. le compartiment (31) et l'espace extérieur au cuiseur électrique sont reliés.

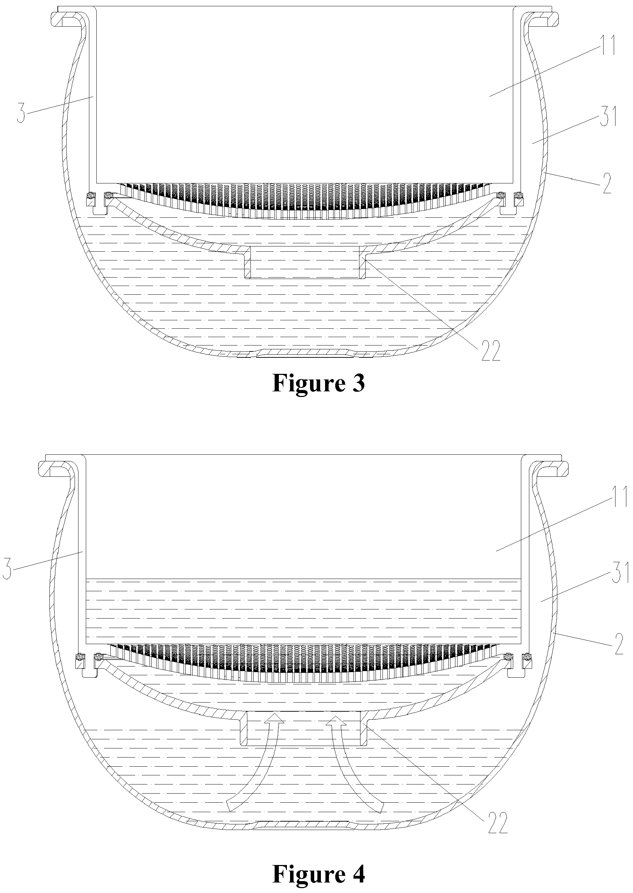

Comme indiqué sur les figures 3 et 4, après que le panier à vapeur a été placé dans le récipient interne (2), le niveau de l'eau se trouvant à l'intérieur du récipient interne ferme le côté du mécanisme d'ouverture (22) se trouvant le plus éloigné de la chambre de remplissage (11), alors l'échange gazeux entre le compartiment (31) et la chambre de remplissage (11) cesse. Dans une phase préliminaire, lorsque l'élément de régulation de la pression (50) directement relié à la chambre de remplissage (11) du panier à vapeur fonctionne, l'élément de régulation de la pression (50) est en mode de succion de l'air, ce qui permet de réduire efficacement la pression à l'intérieur de la chambre de remplissage (11), à ce moment-là, l'eau se trouvant dans le récipient interne (2) passe par l'espace d'ouverture et la zone perméable pour pénétrer jusque dans la chambre de remplissage (11) et réaliser le trempage et la cuisson à l'eau du riz. Lorsque que l'élément de régulation de la pression (50) ne fonctionne pas ou est en mode d'injection de l'air, la pression à l'intérieur de la chambre de remplissage (11) peut être accrue, ceci afin d'équilibrer la pression de la chambre de remplissage (11) avec la pression du compartiment (31) et faire en sorte que l'eau entre dans et sorte de la chambre de remplissage (11), ceci afin de réaliser la séparation de l'eau et du riz, et le rinçage du riz par l'eau.

Lors du processus de chauffage du récipient interne (2), combiné au fonctionnement de l'élément de régulation de la pression (50), l'eau est sous l'action de la différence de pression envoyée de manière répétée dans la chambre de remplissage (11) pour entrer en contact avec le riz de manière à successivement rincer, tremper, cuire à l'eau le riz et à ce que le riz absorbe l'eau. Le niveau de l'eau diminue jusqu'à ne plus pouvoir fermer l'espace d'ouverture, à ce moment-là, le compartiment (31) et la chambre de remplissage (11) sont progressivement reliés. Lorsqu'on continue de chauffer le récipient interne (2), et même si l'élément de régulation de la pression (50) est en mode de succion de l'air, l'eau ne peut plus monter jusque dans la chambre de remplissage (11), à ce moment-là, la vapeur générée s'élève à travers le mécanisme d'ouverture (22) et pénètre dans la chambre de remplissage (11), ou bien passe par le compartiment (31) avant de passer à travers le mécanisme d'ouverture (22) et pénétrer dans la chambre de remplissage (11), afin de réaliser le processus de cuisson à la vapeur du riz.

Il faut préciser qu'afin de garantir le fonctionnement normal de l'élément de régulation de la pression (50), le compartiment (31) est relié à l'espace extérieur au cuiseur à riz, et l'élément de régulation de la pression (50) est directement relié à la chambre de remplissage (11).

On peut voir que le contrôle de l'élément de régulation de la pression (50) permet de faire en sorte que l'eau se trouvant dans le récipient interne (2) du cuiseur électrique entre dans ou sorte de la chambre de remplissage (11). Le contrôle du nombre d'entrées ou de sorties de l'eau dans ou hors de la chambre de remplissage (11), de la température de l'eau et du temps de rétention de l'eau à l'intérieur de la chambre de remplissage (11) permet au cuiseur électrique de réaliser de manière automatique le processus de rinçage du riz et d'absorption de l'eau par le riz, et en même temps de réaliser le processus de cuisson à l'eau puis cuisson à la vapeur du riz à l'intérieur de la chambre de remplissage (11), de manière que le cuiseur électrique cuise un riz à indice glycémique (IG) bas plus nutritif, et à augmenter la satisfaction des consommateurs relativement au processus de cuisson. Aussi, le cuiseur électrique de la présente invention est multifonction, largement automatisé et pratique à l'usage.

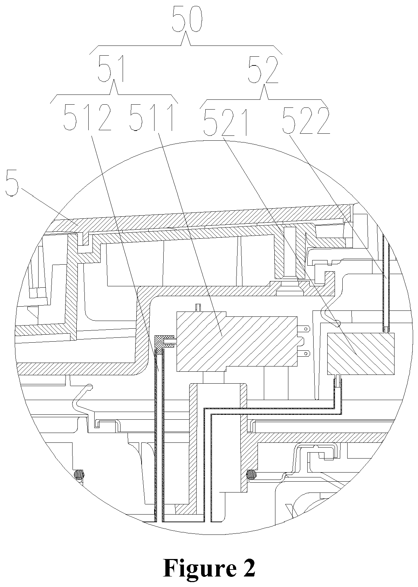

Comme l'indiquent les figures 1 et 2, l'élément de régulation de la pression (50) comprend, installés de manière indépendante : un mécanisme de succion de l'air (51) et un mécanisme d'injection de l'air (52). Le mécanisme de succion de l'air comprend une pièce de succion de l'air (511), cette pièce de succion de l'air (511) aspire l'air à l'intérieur de la chambre de remplissage (11) et l'évacue vers l'espace extérieur au cuiseur électrique. le mécanisme d'injection de l'air (52) comprend un circuit d'injection de l'air (522) et un mécanisme de commutation (521) installé sur le circuit d'injection de l'air (522), une extrémité de ce circuit d'injection de l'air (522) est reliée à la chambre de remplissage (11), et l'autre extrémité de ce circuit d'injection de l'air (522) est reliée directement au compartiment (31) ou bien à l'espace extérieur au cuiseur électrique.

De cette manière, l'activation du mécanisme de succion de l'air (51), le mécanisme d'injection de l'air (52) étant désactivé, fait en sorte que le mécanisme de succion de l'air (51) aspire l'air se trouvant à l'intérieur de la chambre de remplissage (11) de manière à réduire efficacement la pression de la chambre de remplissage (11), de sorte que l'eau se trouvant à l'intérieur du compartiment (31) soit comprimée et envoyée vers la chambre remplissage (11) et entre en contact avec le riz. La désactivation du mécanisme de succion de l'air (51) et l'activation du mécanisme d'injection de l'air (52) font en sorte que la chambre de remplissage (11) est directement reliée au compartiment (31) ou à l'espace extérieur du cuiseur électrique, de sorte que la pression du compartiment (31) est égale à la pression de la chambre de remplissage (11), et que le niveau de l'eau se trouvant à l'intérieur de la chambre de remplissage (11) baisse et reflue hors de la chambre de remplissage (11) pour revenir dans le compartiment (31).

Comme l'indique la figure 2, le mécanisme de succion de l'air (51) comprend encore : un circuit de succion de l'air (512) relié à l'orifice d'admission de l'air de la pièce de succion de l'air (511) et/ou un circuit de d'évacuation de l'air relié à l'orifice d'évacuation de l'air de la pièce de succion de l'air (511). De cette manière, l'installation d'un circuit de succion de l'air (512) ou d'un circuit d'évacuation de l'air permet d'augmenter efficacement la pertinence de l'action de la pièce de succion de l'air (511) sur la chambre de remplissage (11), d'allonger raisonnablement l'itinéraire du circuit de la succion de l'air du mécanisme de succion de l'air (51), et de fournir ainsi plusieurs options rationnelles de positionnement pour l'installation de la pièce de succion de l'air (511).

Bien entendu, l'orifice de succion de l'air de la pièce de succion de l'air (511) peut être directement relié à la chambre de remplissage, et l'orifice d'évacuation de l'air de la pièce de succion de l'air (511) directement relié à l'espace extérieur au cuiseur électrique, ceci permet d'éluder efficacement l'installation du circuit de succion de l'air (512) et du circuit d'évacuation de l'air, et de simplifier ainsi la structure du mécanisme de succion de l'air. Dans un même temps, on peut encore utiliser efficacement la structure interne du boîtier externe (1) ou du couvercle supérieur (5), pour, en même temps que de réduire les coûts de fabrication du cuiseur électrique, réaliser la fonction de succion de l'air stable de la chambre de remplissage (11).

Au moins une partie de l'élément de régulation de la pression (50) est installée sur le couvercle supérieur (5) et/ou sur le boîtier externe (1). De cette manière, on garantit non seulement la stabilité d'installation de l'élément de régulation de la pression (50), mais on utilise en outre, et de manière rationnelle, la structure interne du couvercle supérieur (5) ou du boîtier externe (1), ceci afin d'améliorer la rationalité structurelle du cuiseur électrique.

Concrètement, comme le montrent les exemples d'applications des figures 1 et 2, le mécanisme de succion de l'air (51) et le mécanisme d'injection de l'air (52) sont installés à l'intérieur du couvercle supérieur (5). De cette manière, lorsque que le couvercle supérieur (5) du cuiseur électrique est fermé, le mécanisme de succion de l'air (51) et le mécanisme d'injection de l'air (52) sont situés au plus près de la chambre de remplissage (11), ce qui permet d'améliorer la commodité des fonctionnalités de succion de l'air du mécanisme de succion de l'air (51) et d'injection de l'air du mécanisme d'injection de l'air (52).

Le couvercle supérieur (5) comprend un premier canal d'installation qui relie la chambre de remplissage (11) à l'espace extérieur au cuiseur électrique, et la pièce de succion de l'air (511) est installée à l'intérieur de ce premier canal d'installation. Le couvercle supérieur (5) comprend un second canal d'installation qui relie la chambre de remplissage (11) à l'espace extérieur au cuiseur électrique, et le mécanisme de commutation (521) est installé à l'intérieur de ce second canal d'installation et contrôle l'état de fermeture et d'ouverture de ce second canal d'installation, lequel second canal d'installation fait office de circuit d'injection de l'air (522). De cette manière, on utilise rationnellement l'espace intérieur du couvercle supérieur (5) comme premier canal d'installation et second canal d'installation, et l'usage du premier canal d'installation et du second canal d'installation permet de garantir la réalisation de l'échange gazeux entre la chambre de remplissage (11) et l'espace extérieur au cuiseur électrique, et de fournir un endroit d'installation à la pièce de succion de l'air (511) et au mécanisme de commutation (521). Le premier canal d'installation et le second canal d'installation sont disposés de façon indépendante l'un de l'autre, ce qui permet d'éviter efficacement les interférences mutuelles entre la pièce de succion de l'air (511) et le mécanisme de commutation (521), et ainsi d'améliorer la fiabilité de fonctionnement de l'élément de régulation de la pression (50).

Le mécanisme de succion de l'air (51) est une pompe à vide ou une pompe de dépression.

Le mécanisme de commutation (521) est soit une valve de commutation électrique soit une électrovalve.

Comme l'indique la figure 1, le bord supérieur du panier à vapeur de la présente invention enveloppe le bord supérieur du récipient interne (2), le compartiment (31) et l'espace extérieur au cuiseur électrique sont reliés par l'intermédiaire de l'interstice situé entre le bord supérieur du panier à vapeur et le bord supérieur du récipient interne (2), ceci afin de garantir que l'air extérieur de l'espace au cuiseur électrique pénètre efficacement dans le compartiment (31) et injecte de manière stable la pression atmosphérique à l'intérieur du compartiment (31). de plus, cela permet de garantir que, lorsque la pièce de succion de l'air (511) fonctionne, l'eau à l'intérieur du compartiment (31) puisse aisément pénétrer jusque dans la chambre de remplissage (11).

Dans un autre exemple d'application de la présente invention non illustré, un orifice de passage est situé sur le bord supérieur du panier à vapeur (3) et/ou sur le récipient interne (2). Le cuiseur électrique comprend encore un circuit de liaison relié à cet orifice de passage. le compartiment (31) est relié à l'espace extérieur au cuiseur électrique par l'intermédiaire de cet orifice de passage et de ce circuit de liaison. Comme le circuit de liaison est indépendant, cela permet de garantir la constance de la pénétration de l'air de l'espace extérieur au cuiseur électrique dans le compartiment (31).

Il faut noter que les termes techniques employés ici sont uniquement destinés à décrire des modes d'applications concrets, et non à limiter les modes d'applications fournis à titre d'exemples selon la présente demande. Il faut aussi comprendre que l'usage dans la présente description des termes "comprendre" et/ou "inclure" implique qu'il existe des caractéristiques, étapes, tâches, composants, pièces et/ou des éléments les constituant.

Il faut préciser que les termes techniques "premier(ère)" et "second(e)" employés dans la description, les revendications, et les figures annexes de la présente demande servent à distinguer des phénomènes semblables et non à décrire une séquence spécifique ou un ordre d'antériorité-postériorité. Il faut comprendre que les données utilisées ainsi peuvent, dans des conditions appropriées, être interchangées.

Les exemples mentionnés plus haut constituent uniquement des exemples d'applications préférables de la présente invention, ils ne constituent en rien une restriction à la présente invention.

## Revendications

1. Cuiseur électrique comprenant :
- un boîtier externe (1) ;
- un couvercle supérieur (5), lequel couvercle supérieur (5) est installé sur le boîtier externe (1) ;
- un récipient interne (2) installé à l'intérieur du boîtier externe (1) ;
- un panier à vapeur (3) installé à l'intérieur du récipient interne (2), et sous ce panier à vapeur (3) se trouve un mécanisme d'ouverture (22) faisant face à la paroi du fond du récipient interne (2) et/ou situé dans le prolongement de la paroi latérale du récipient interne (2) ; le panier à vapeur (3) est pourvu d'une zone perméable et inclut une chambre de remplissage (11) située sur cette zone perméable ; un espace d'ouverture entouré par le mécanisme d'ouverture (22) est relié à la chambre de remplissage (11) par l'intermédiaire de la zone perméable ; l'intervalle entre la surface extérieure du panier à vapeur (3) et la surface de la paroi latérale intérieure du récipient interne (2) forme un compartiment (31), lequel compartiment (31) est relié à la chambre de remplissage (11) par l'intermédiaire de l'espace d'ouverture ; le couvercle supérieur (5) et la partie supérieure de la chambre de remplissage (11) sont hermétiquement abouchés ;
**caractérisé en ce que** le cuiseur électrique comporte un élément de régulation de la pression (50) relié à la chambre de remplissage (11), lequel élément de régulation de la pression (50) est destiné à réguler la pression à l'intérieur de la chambre de remplissage (11).

2. Cuiseur électrique selon la revendication 1, **caractérisé en ce que** l'élément de régulation de la pression (50) comprend :
- un mécanisme de succion de l'air (51), lequel mécanisme de succion de l'air (51) comprend une pièce de succion de l'air (511), cette pièce de succion de l'air (511) aspire l'air à l'intérieur de la chambre de remplissage (11) et l'évacue vers l'espace extérieur au cuiseur électrique ;
- un mécanisme d'injection de l'air (52), lequel mécanisme d'injection de l'air (52) comprend un circuit d'injection de l'air (522) et un mécanisme de commutation (521) installé sur le circuit d'injection de l'air (522), une extrémité de ce circuit d'injection de l'air (522) est reliée à la chambre de remplissage (11), et l'autre extrémité de ce circuit d'injection de l'air (522) est reliée directement au compartiment (31) ou bien à l'espace extérieur au cuiseur électrique.

3. Cuiseur électrique selon la revendication 2, **caractérisé en ce que** le mécanisme de succion de l'air (51) comprend :
- un circuit de succion de l'air (512) relié à l'orifice d'admission de l'air de la pièce de succion de l'air (511) ; et/ou
- un circuit d'évacuation de l'air relié à l'orifice d'évacuation de l'air de la pièce de succion de l'air (511).

4. Cuiseur électrique selon l'une des revendications 1 à 3, **caractérisé en ce qu'**au moins une partie de l'élément de régulation de la pression (50) est installée sur le couvercle supérieur (5) et/ou sur le boîtier externe (1).

5. Cuiseur électrique selon la revendication 2 ou 3, **caractérisé en ce que** le mécanisme de succion de l'air (51) et le mécanisme d'injection de l'air (52) sont installés à l'intérieur du couvercle supérieur (5).

6. Cuiseur électrique selon l'une des revendications 2 à 5, **caractérisé en ce que** le couvercle supérieur (5) comprend un premier canal d'installation qui relie la chambre de remplissage (11) à l'espace extérieur au cuiseur électrique, et **en ce que** la pièce de succion de l'air (511) est installée à l'intérieur du premier canal d'installation.

7. Cuiseur électrique selon la revendication 6, **caractérisé en ce que** le couvercle supérieur (5) comprend un second canal d'installation qui relie la chambre de remplissage (11) à l'espace extérieur au cuiseur électrique, et **en ce que** le mécanisme de commutation (521) est installé à l'intérieur de ce second canal d'installation et contrôle l'état de fermeture et d'ouverture de ce second canal d'installation, lequel second canal d'installation fait office de circuit d'injection de l'air (522).

8. Cuiseur électrique selon l'une des revendications 2 à 7, **caractérisé en ce que** la pièce de succion de l'air (511) est une pompe à vide ou une pompe de dépression.

9. Cuiseur électrique selon l'une des revendications 2 à 8 **caractérisé en ce que** le mécanisme de commutation (521) est soit une valve commutation électrique soit une électrovalve.

## Patentansprüche

1. Elektrischer Kocher, der Folgendes umfasst:
- ein externes Gehäuse (1);
- einen oberen Deckel (5), wobei der obere Deckel (5) auf dem externen Gehäuse (1) installiert ist;
- einen internen Behälter (2), der in dem Inneren des externen Gehäuses (1) installiert ist;
- einen Dampfkorb (3), der in dem Inneren des internen Behälters (2) installiert ist, und wobei sich unter diesem Dampfkorb (3) ein Öffnungsmechanismus (22) befindet, der der Wand des Bodens des internen Behälters (2) gegenüberliegt und/oder in der Verlängerung der Seitenwand des internen Behälters (2) liegt; wobei der Dampfkorb (3) mit einer durchlässigen Zone versehen ist und eine Füllkammer (11) beinhaltet, die sich auf dieser durchlässigen Zone befindet; einen Öffnungsraum, der von dem Öffnungsmechanismus (22) umgeben und mit der Füllkammer (11) über die durchlässige Zone verbunden ist; wobei das Intervall zwischen der Außenoberfläche des Dampfkorbs (3) und der Oberfläche der Innenseitenwand des internen Behälters (2) ein Fach (31) bildet, wobei das Fach (31) mit der Füllkammer (11) über den Öffnungsraum verbunden ist; und der obere Deckel (5) und der obere Teil der Füllkammer (11) sich hermetisch vereinigen;
**dadurch gekennzeichnet, dass** der elektrische Kocher ein Regulierungselement (50) des Drucks umfasst, das mit der Füllkammer (11) verbunden ist, wobei das Regulierungselement (50) des Drucks dazu bestimmt ist, den Druck in dem Inneren der Füllkammer (11) zu regulieren.

2. Elektrischer Kocher nach Anspruch 1, **dadurch gekennzeichnet, dass** das Regulierungselement (50) des Drucks Folgendes umfasst:
- einen Ansaugmechanismus (51) der Luft, wobei der Ansaugmechanismus (51) der Luft ein Ansaugteil (511) der Luft umfasst, wobei dieses Ansaugteil (511) die Luft in dem Inneren der Füllkammer (11) ansaugt und sie zu dem Raum außerhalb des elektrischen Kochers ableitet;
- einen Einspritzmechanismus (52) der Luft, wobei der Einspritzmechanismus (52) der Luft einen Einspritzkreislauf (522) der Luft und einen Umschaltmechanismus (521), der auf dem Einspritzkreislauf (522) der Luft installiert ist, umfasst, wobei ein Ende dieses Einspritzkreislaufs (522) der Luft mit der Füllkammer (11) verbunden ist, und das andere Ende dieses Einspritzkreislaufs (522) der Luft direkt mit dem Fach (31) oder aber mit dem Raum außerhalb des elektrischen Kochers verbunden ist.

3. Elektrischer Kocher nach Anspruch 2, **dadurch gekennzeichnet, dass** der Ansaugmechanismus (51) der Luft Folgendes umfasst:
- einen Ansaugkreislauf (512) der Luft, der mit der Einlassöffnung der Luft des Ansaugteils (511) der Luft verbunden ist; und/oder
- einen Ableitkreislauf der Luft, der mit der Ableitöffnung der Luft des Ansaugteils (511) der Luft verbunden ist.

4. Elektrischer Kocher nach einem der Ansprüche 1 bis 3, **dadurch gekennzeichnet, dass** mindestens ein Teil des Regulierungselements (50) des Drucks auf dem oberen Deckel (5) und/oder auf dem externen Gehäuse (1) installiert ist.

5. Elektrischer Kocher nach Anspruch 2 oder 3, **dadurch gekennzeichnet, dass** der Ansaugmechanismus (51) der Luft und der Einspritzmechanismus (52) der Luft in dem Inneren des oberen Deckels (5) installiert sind.

6. Elektrischer Kocher nach einem der Ansprüche 2 bis 5, **dadurch gekennzeichnet, dass** der obere Deckel (5) einen ersten Installationskanal umfasst, der die Füllkammer (11) mit dem Raum außerhalb des elektrischen Kochers verbindet, und dass das Ansaugteil (511) der Luft in dem Inneren des ersten Installationskanals installiert ist.

7. Elektrischer Kocher nach Anspruch 6, **dadurch gekennzeichnet, dass** der obere Deckel (5) einen zweiten Installationskanal umfasst, der die Füllkammer (11) mit dem Raum außerhalb des elektrischen Kochers verbindet, und dass der Umschaltmechanismus (521) in dem Inneren dieses zweiten Installationskanals installiert ist und den Schließ- und Öffnungszustand dieses zweiten Installationskanals steuert, wobei der zweite Installationskanal als Einspritzkreislauf (522) der Luft dient.

8. Elektrischer Kocher nach einem der Ansprüche 2 bis 7, **dadurch gekennzeichnet, dass** das Ansaugteil (511) der Luft eine Vakuumpumpe oder eine Unterdruckpumpe ist.

9. Elektrischer Kocher nach einem der Ansprüche 2 bis 8, **dadurch gekennzeichnet, dass** der Umschaltmechanismus (521) entweder ein elektrisches Umschaltventil oder ein Magnetventil ist.

## Claims

1. Electric cooker comprising:
- an outer casing (1);
- an upper cover (5), which upper cover (5) is installed on the outer casing (1);
- an inner container (2) installed inside the outer casing (1);
- a steaming basket (3) installed inside the inner container (2), and under this steaming basket (3) is located an opening mechanism (22) facing the wall of the bottom of the inner container (2) and/or situated in the extension of the side wall of the inner container (2); the steaming basket (3) is provided with a permeable zone and includes a filling chamber (11) situated on this permeable zone; an opening space surrounded by the opening mechanism (22) is connected to the filling chamber (11) by way of the permeable zone; the interval between the outer surface of the steaming basket (3) and the surface of the inner side wall of the inner container (2) forms a compartment (31), which compartment (31) is connected to the filling chamber (11) by way of the opening space; the upper cover (5) and the upper portion of the filling chamber (11) are hermetically put in contact with;
**characterised in that** the electric cooker comprises an element for regulating the pressure (50) connected to the filling chamber (11), which element for regulating pressure (50) is intended to regulate the pressure inside the filling chamber (11).

2. Electric cooker according to claim 1, **characterised in that** the element for regulating pressure (50) comprises:
- a mechanism for suctioning air (51), which mechanism for suctioning air (51) comprises a part for suctioning air (511), this part for suctioning air (511) suctions the air inside the filling chamber (11) and evacuates it towards the outer space of the electric cooker;
- a mechanism for injecting air (52), which mechanism for injecting air (52) comprises an air injection circuit (522) and a switching mechanism (521) installed on the air injection circuit (522), an end of this air injection circuit (522) is connected to the filling chamber (11), and the other end of this air injection circuit (522) is connected directly to the compartment (31) or to the outer space of the electric cooker.

3. Electric cooker according to claim 2, **characterised in that** the mechanism for suctioning air (51) comprises:
- a circuit for suctioning air (512) connected to the air inlet orifice of the part for suctioning air (511); and/or
- a circuit for evacuating air connected to the air evacuation orifice of the part for suctioning air (511).

4. Electric cooker according to one of claims 1 to 3, **characterised in that** at least one portion of the element for regulating pressure (50) is installed on the upper cover (5) and/or on the outer casing (1).

5. Electric cooker according to claim 2 or 3, **characterised in that** the mechanism for suctioning air (51) and the air injection mechanism (52) are installed inside the upper cover (5).

6. Electric cooker according to one of claims 2 to 5, **characterised in that** the upper cover (5) comprises a first installation channel which connects the filling chamber (11) to the outer space of the electric cooker, and **in that** the part for suctioning air (511) is installed inside the first installation channel.

7. Electric cooker according to claim 6, **characterised in that** the upper cover (5) comprises a second installation channel which connects the filling chamber (11) to the outer space of the electric cooker, and **in that** the switching mechanism (521) is installed inside this second installation channel and controls the closing and opening state of this second installation channel, which second installation channel acts as an air injection circuit (522).

8. Electric cooker according to one of claims 2 to 7, **characterised in that** the part for suctioning air (511) is a vacuum pump or a depression pump.

9. Electric cooker according to one of claims 2 to 8, **characterised in that** the switching mechanism (521) is either an electric switching valve or an electrovalve.
